# EUROPEAN PATENT SPECIFICATION

(11) **EP 3 873 030 B1**
(45) Date of publication and mention of the grant of the patent: **04.09.2024**
(21) Application number: 20159244.1
(22) Date of filing: 25.02.2020
(51) Int. Cl.: H04L 41/0833, H04L 41/0895

(54) **METHOD FOR ENHANCED MANAGEMENT AND/OR ENERGY EFFICIENT IMPLEMENTATION OF NETWORK FUNCTION VIRTUALIZATION WITHIN A TELECOMMUNICATIONS NETWORK, TELECOMMUNICATIONS NETWORK, NETWORK FUNCTION VIRTUALIZATION INFRASTRUCTURE, SCALING ENTITY OR SCALING MODULE OF A VIRTUAL NETWORK FUNCTION APPLICATION OR VIRTUAL NETWORK FUNCTION APPLICATION, PROGRAM AND COMPUTER PROGRAM PRODUCT**
VERFAHREN ZUR VERBESSERTEN VERWALTUNG UND/ODER ENERGIEEFFIZIENTEN IMPLEMENTIERUNG EINER NETZWERKFUNKTIONSVIRTUALISIERUNG IN EINEM TELEKOMMUNIKATIONSNETZWERK, TELEKOMMUNIKATIONSNETZWERK, NETZWERKFUNKTIONSVIRTUALISIERUNGSINFRASTRUKTUR, SKALIERUNGSENTITÄT ODER SKALIERUNGSMODUL EINER ANWENDUNG MIT VIRTUELLEN NETZWERKFUNKTIONEN ODER ANWENDUNG MIT VIRTUELLER NETZWERKFUNKTION, PROGRAMM UND COMPUTERPROGRAMMPRODUKT
PROCÉDÉ D'AMÉLIORATION DE LA GESTION ET/OU DE LA MISE EN UVRE EFFICACE D'ÉNERGIE DE VIRTUALISATION DE FONCTIONS DE RÉSEAU DANS UN RÉSEAU DE TÉLÉCOMMUNICATIONS, RÉSEAU DE TÉLÉCOMMUNICATIONS, INFRASTRUCTURE DE VIRTUALISATION DE FONCTION DE RÉSEAU, ENTITÉ DE MISE À L'ÉCHELLE OU MODULE DE MISE À L'ÉCHELLE D'UNE APPLICATION DE FONCTION DE RÉSEAU VIRTUEL OU D'APPLICATION DE FONCTION DE RÉSEAU VIRTUEL, PROGRAMME ET PRODUIT PROGRAMME INFORMATIQUE

(43) Date of publication of application: 01.09.2021
(73) Proprietor: Deutsche Telekom AG, 53113 Bonn (DE)
(72) Inventor: NEGM, Mohamed, 53175 Bonn (DE)
(74) Representative: Schwöbel, Thilo K.

(56) References cited:
- EP-A1- 3 179 673
- WO-A1-2017/173901
- US-A1- 2020 004 569
- "Network Functions Virtualisation; Part 1: Infrastructure Architecture; Sub-part 3: Architecture of Compute Domain Final Draft June 27, 2014 ;DGS NFV-INF003", ETSI DRAFT; DGS NFV-INF003, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ISG - NFV, no. V0.3.2, 27 June 2014 (2014-06-27), pages 1 - 70, XP014200260

## Description

### BACKGROUND

The present invention relates to a method for enhanced management and/or energy efficient implementation of network function virtualization within a telecommunications network, wherein the telecommunications network comprises a network function virtualization infrastructure, comprising a plurality of physical and/or virtual machines as processing or computing resources in a network architecture of the telecommunications network realizing network function virtualization technologies.

Furthermore, the present invention relates to a telecommunications network for enhanced management and/or energy efficient implementation of network function virtualization within a telecommunications network, wherein the telecommunications network comprises a network function virtualization infrastructure, comprising a plurality of physical and/or virtual machines as processing or computing resources in a network architecture of the telecommunications network realizing network function virtualization technologies.

Furthermore, the present invention relates to a network function virtualization infrastructure for enhanced management and/or energy efficient implementation of network function virtualization within a telecommunications network, the network function virtualization infrastructure comprising a plurality of physical and/or virtual machines as processing or computing resources in a network architecture of the telecommunications network realizing network function virtualization technologies.

Another aspect of the present invention relates to a computer program and to a computer-readable medium enabling to perform the inventive method.

Network management is a big challenge in large-scale enterprise and data center environments. Furthermore, data centers are becoming likewise important for operators of telecommunications networks, and especially mobile communications networks, especially due to technologies such as virtualization and software defined networks. US 2020/004569 A1 discloses an approach for managing an application workload on a computing system that includes data centers. "Network Functions Virtualisation; Part 1: Infrastructure Architecture; Sub-part 3: Architecture of Compute Domain", Final Draft, ETSI DRAFT; DGS NFV-INF003, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ISG - NFV, no. V0.3.2, 27 June 2014 presents an architectural description of the compute and storage domain of the infrastructure which supports virtualised network functions (VNFs).

As virtual network functions are maturing and becoming a mainstream for all telecommunications applications, network operators are building more and more datacenters to serve the future need by the virtual network functions and also to become more cloudified operators with a lot of automation and self-provisioning in their operational processes.

However, the current design of virtual network function applications is not ideal, due to the specifics and the high-performance requirements from the applications, e.g. as regards latency, jitter, data rate, etc. These requirements are making the virtual network functions larger and more resource demanding than normal virtualized applications. This causes the virtual machines forming the virtual network functions to have a comparatively large foot-print, both in space as in energy demand, and usually static in size, which in turn causes low utilization of resources on the underlying physical hosts.

The consequence thereof is that the host resources are running while not being actually used, and the requirements from the data center physical hardware is comparatively high, thus, leading to a power consumption that in total is much higher (for a comparable network performance or provision of communication services to customers of the telecommunications network) than compared to old purpose-built hardware.

### SUMMARY

It is an object of the present invention to provide a method for enhanced management and/or energy efficient implementation of network function virtualization within a telecommunications network such that it is possible to realize, besides a greater flexibility and a higher reliability, a reduced energy consumption of the telecommunications network.

The object of the present invention is achieved by a method for enhanced management and/or energy efficient implementation of network function virtualization within a telecommunications network according to claim 1.-

It is thereby advantageously possible according to the present invention that a multiple data center deployment of virtual network functions is possible to be realized, especially under a control of a virtual network function application, i.e. a control which is not driven by infrastructure management decisions of the underlying infrastructure of computing resources. This addresses a missing part that serves the telecommunication virtual network functions which provide high availability solutions on application level that is independent from the underlying infrastructure.

Hence, according to the present invention a solution is provided to the question how to scale network resources in telecommunications networks, which resources typically cannot simply be scaled by a decision taken by an infrastructure manager component as it is the case in most conventional information technology data centers; according to the present invention, and in the context of telecommunication data centers, decisions regarding the operation of virtual network functions and especially scaling decisions are taken on an application level or on a virtual network function application level.

According to the present invention the telecommunications network comprises a network function virtualization infrastructure, comprising a plurality of physical and/or virtual machines as processing or computing resources in a network architecture of the telecommunications network realizing network function virtualization technologies. Especially according to the present invention, the network function virtualization infrastructure comprising a first data center and at least a second data center, but typically more than two data centers that are, typically, geographically located at a certain distance such as to be able to cover a geographical area of, e.g., a country or a region. However, it is not strictly necessary for the data centers to be geographically separated by very large distances. Furthermore, according to the present invention, by means of or by using the network function virtualization infrastructure, at least one virtual network function application is implemented within the telecommunications network, the virtual network function application involving a plurality of different virtual network function instances using at least part of the plurality of physical and/or virtual machines as processing or computing resources. Typically, a plurality of different virtual network functions or virtual network function applications are needed to be implemented within the telecommunications network such that the telecommunications network is able to be operated in order to provide the requested communication services to clients or customers of the telecommunications network. According to the present invention, the inventive method comprises, in a first step, that the virtual network function application receives, regarding the first data center, a first overall consumption indication and a first consumption limit indication, and, regarding the second data center, a second overall consumption indication and a second consumption limit indication, the first and second overall consumption indication and the first and second consumption limit indication relating, respectively, to the overall energy consumption and to an energy consumption limit of the first and at least the second data center, respectively. Furthermore according to the present invention, the inventive method comprises, in a second step, that the virtual network function application decides, dependent on the first and second overall consumption indication and/or dependent on the first and second consumption limit indication,
-- whether, and in which one of the available data centers, an additional virtual network function instance is to be used or is to be instantiated and/or whether, and in which one of the available data centers, an additional physical and/or virtual machine is to be used, and/or
-- whether, and in which one of the available data centers, a virtual network function instance is to be removed or released and/or whether, and in which one of the available data centers, a physical and/or virtual machine is to be deallocated or freed.

Especially by means of setting, or modifying, the first and second consumption limit indication, it is advantageously possible according to the present invention that the energy requirements of data centers are able to be influenced while nevertheless the actual decisions being taken by the virtual network function applications themselves, especially by means of taking into consideration both the respective overall consumption indication (i.e. the current energy consumption of the respective data center) and the respective consumption limit indication.

According to a preferred embodiment of the present invention, depending on
-- differing performance requirements and/or depending on different network loads of the telecommunications network at different points in time, and
-- differing first and second overall consumption indications and/or first and second consumption limit indications at different points in time,

the virtual network function application uses different processing or computing resources of the network function virtualization infrastructure and/or a different distribution of processing or computing resources among the first and second data center,
wherein the virtual network function application comprises a scaling entity or scaling module, wherein - depending on a current performance requirement and/or on a current network load, as well as depending on the first and second overall consumption indication and/or the first and second consumption limit indication - the scaling entity or scaling module of the virtual network function application decides
   -- to modify the allocation of processing or computing resources of the network function virtualization infrastructure, and/or
   -- to modify the distribution of processing or computing resources and/or the distribution of performance requirements and/or of network load among the first and second data center.

Thereby, it is advantageously possible according to the present invention to flexibly and efficiently use the computing resources of the network function virtualization infrastructure.

According to a further embodiment of the present invention, in case that the first overall consumption indication and the first consumption limit indication indicate that the energy consumption limit of the first data center is reached, the scaling entity or scaling module of the virtual network function application decides to move additional performance requirements and/or additional network load of the telecommunications network to a data center different from the first data center, especially to the second data center.

Thereby, it is advantageously possible to scale out by using an additional data center.

According to an additional embodiment of the present invention, in case that the first overall consumption indication and the first consumption limit indication indicate that additional capacity and/or energy consumption volume is available at the first data center, the scaling entity or scaling module of the virtual network function application decides to add or to instantiate an additional virtual network function instance within the first data center and/or to add or to use an additional physical and/or virtual machine within the first data center, thereby especially taking into account the number of required additional physical and/or virtual machines as well as an average consumption indication being related to the average energy consumption of a physical and/or virtual machine.

Thereby, it is advantageously possible according to the present invention that additional capacity (of the virtual network function) is able to be hosted by the first data center without risking to exceed the respective consumption limit indication.

According to still a further embodiment of the present invention, the network function virtualization infrastructure transmits the first overall consumption indication and the first consumption limit indication to the virtual network function application.

It is thereby advantageously possible according to the present invention that the virtual network function application gets the respective information, i.e. the first overall consumption indication and the first consumption limit indication, directly from the respective data center.

In case of lowering the first consumption limit indication while, besides the virtual network function application, a further virtual network function application uses processing or computing resources of the first data center, the first overall consumption indication and the first consumption limit indication is transmitted only to the virtual network function application, especially in case that the virtual network function application uses more processing or computing resources of the first data center compared to the further virtual network function application,
wherein especially a data center busy status indication is transmitted to the further virtual network function application, the data center busy status indication especially indicating that scaling operations are to be avoided regarding the further virtual network function application.

It is thereby advantageously possible to controllable reduce the energy consumption of a data center, without the risk of provoking a race of different virtual network function applications trying to steer traffic to other data centers.

Furthermore, the present invention relates to a telecommunications network for enhanced management and/or energy efficient implementation of network function virtualization within a telecommunications network, wherein the telecommunications network comprises a network function virtualization infrastructure according to claim 7.

Furthermore, the present invention relates to a network function virtualization infrastructure according to independent claim 7.

Additionally, the present invention relates to a computer program comprising a computer readable program code which, when executed on a computer or on a physical and/or virtual machine of a network function virtualization infrastructure of or within a telecommunications network causes the computer or the physical and/or virtual machine of the network function virtualization infrastructure of or within the telecommunications network to perform the method according to the present invention.

Still additionally, the present invention relates to a computer-readable medium comprising instructions which when executed on a computer or on a physical and/or virtual machine of a network function virtualization infrastructure of or within a telecommunications network causes the computer or the physical and/or virtual machine of the network function virtualization infrastructure of or within the telecommunications network to perform the method according to the present invention.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

**Figure** 1 schematically illustrate a mobile telecommunications network for enhanced management and/or energy efficient implementation of network function virtualization within a telecommunications network, wherein a mobile communications network is used as an example of a telecommunications network according to the present invention and especially according to the inventive method.
**Figure** 2 schematically illustrates an network function virtualization infrastructure providing an overview of two data centers.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

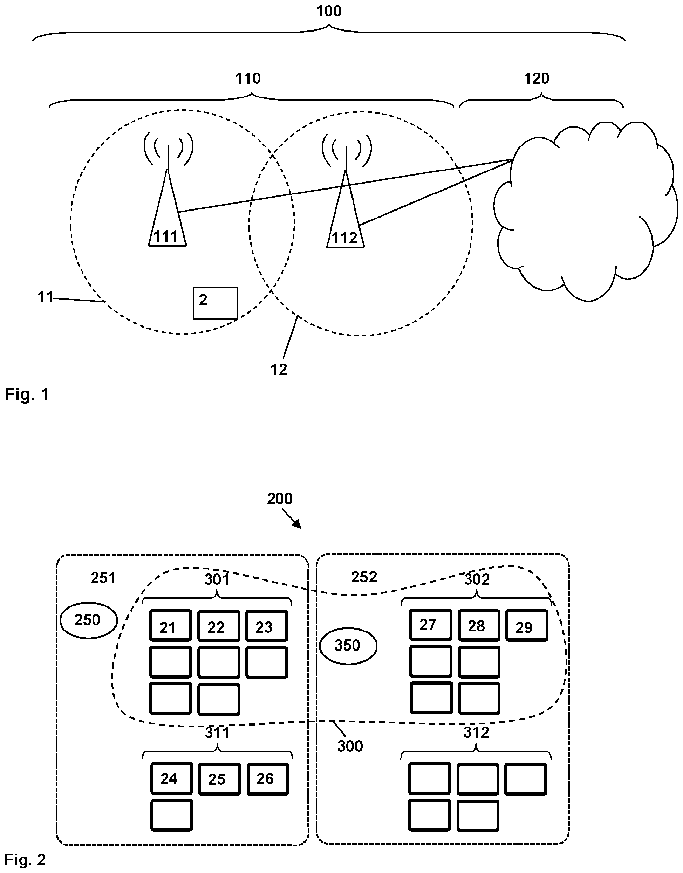

In Figure 1, a telecommunications network 100 according to the present invention is schematically illustrated. According to the exemplary embodiment of Figure 1, the telecommunications network 100 is implemented as a mobile telecommunications network comprising a radio access network 110 and a core network 120. The radio access network 110 of the mobile communications network 100 comprises a plurality of radio cells of which a first radio cell 11 and a second radio cell 12 is exemplarily represented. The radio cells 11, 12 correspond to radio coverage areas of base station entities, typically eNodeBs or gNodeBs, of which a first base station entity 111 and a second base station entity 112 is schematically represented in Figure 1. The communications network 100 is configured to provide communication services to at least one user equipment 2; however, typically a plurality of user equipments is served by a base station entity.

Especially the core network 120 of the telecommunications network 100 - but, at least in principle and/or at least in part also the access network 110 of the telecommunications network 100 - comprises a plurality of network nodes or network entities that are not necessarily represented in detail. The different network nodes or network entities are required for providing different network node functionalities such that the telecommunications network 100 is able to provide the communication services to its users; in the case of a mobile communications network such communication services are typically requested - directly or indirectly - by the respective user equipments.

The present invention relates to any telecommunications network comprising network nodes that are able to be virtualized. Accordingly, the mobile telecommunications network shown in Figure 1, especially its core network 120, only represents an example of a telecommunications network according to the present invention. Other examples of an inventive telecommunications network comprise a fixed line communications network or another telecommunications network comprising computer nodes.

In Figure 2, an network function virtualization infrastructure 200 providing an overview of two data centers 251, 252 is schematically shown. According to the present invention, the telecommunications network 100 comprises the network function virtualization infrastructure 200, comprising a plurality of physical and/or virtual machines as processing or computing resources in a network architecture of the telecommunications network 100 realizing network function virtualization technologies. In the exemplary embodiment shown in Figure 2, the network function virtualization infrastructure 200 comprises a first data center 251 and a second data center 252. In practice, the network function virtualization infrastructure 200 might and typically does comprise additional data centers not shown in Figure 2. The network function virtualization infrastructure 200 allows to implement at least one virtual network function application 300 within the telecommunications network 100. However, typically a plurality of virtual network function applications are implemented, and are typically needed within the telecommunications network 100. The virtual network function application 300 involves a plurality of different virtual network function instances 301, 302 using at least part of the plurality of physical and/or virtual machines as processing or computing resources. A first virtual network function instance 301 is shown as being part of the first data center 251, and a second virtual network function instance 302 is shown as being part of the second data center 252. Further virtual network function instances 311, 312 (of a further virtual network function application) are also schematically shown in Figure 2. Figure 2 schematically shows a plurality of physical and/or virtual machines: a first, second and third physical and/or virtual machine 21, 22, 23 is shown as part of the first virtual network function instance 301 of the virtual network function application 300; a fourth, fifth and sixth physical and/or virtual machine 24, 25, 26 is shown as part of a first virtual network function instance 311 of the further virtual network function application; a seventh, eighth and ninth physical and/or virtual machine 27, 28, 29 is shown as part of the second virtual network function instance 302 of the virtual network function application 300.

According to the present invention, in a first step, the virtual network function application 300 receives, regarding the first data center 251, a first overall consumption indication and a first consumption limit indication, and, regarding the second data center 252, a second overall consumption indication and a second consumption limit indication. The first and second overall consumption indication and the first and second consumption limit indication are relating, respectively, to the overall energy consumption and to an energy consumption limit of the first and at least the second data center 251, 252, respectively. According to the present invention, it is the virtual network function application 300 that decides, in a second step and dependent on the first and second overall consumption indication and/or dependent on the first and second consumption limit indication, whether (and how) to scale out (i.e. typically add a virtual network function instance, and where, i.e. in which data center) or whether (and how) to scale in (i.e. typically remove a virtual network function instance, and where, i.e. in which data center). This means, the virtual network function application 300 decides
-- whether, and in which one of the available data centers 251, 252, an additional virtual network function instance 301, 302 is to be used or is to be instantiated and/or whether, and in which one of the available data centers 251, 252, an additional physical and/or virtual machine is to be used, and/or
-- whether, and in which one of the available data centers 251, 252, a virtual network function instance 301, 302 is to be removed or released and/or whether, and in which one of the available data centers 251, 252, a physical and/or virtual machine is to be deallocated or freed. According to the present invention, it is preferred that the virtual network function application 300 comprises a scaling entity or scaling module 350, wherein - depending on a current performance requirement and/or on a current network load, as well as depending on the first and second overall consumption indication and/or the first and second consumption limit indication - the scaling entity or scaling module 350 of the virtual network function application 300 decides

-- to modify the allocation of processing or computing resources of the network function virtualization infrastructure 200, and/or
-- to modify the distribution of processing or computing resources and/or the distribution of performance requirements and/or of network load among the first and second data center 251, 252 (or among further data centers).

According to conventionally known methods, solutions to reduce the power consumption within data centers typically aimed at consolidating virtual machines that are idle; however, regarding virtual network functions, such conventionally known solutions have the drawback that, typically, the selection criteria (to decide whether, and how, to scale in or out) are controlled by the infra-structure layer itself, and are not integrating information or knowledge of (or present in) the virtual network function application into the decision. Due to the complexity of the functionality of virtual network functions, their underlying virtual machines, connectivity and availability requirements, it is not possible or advisable to just shut down a virtual machine and move it to another host within the datacenter (or to another data center) without affecting the overall performance of the virtual network function. Additionally, there is the difficulty of moving virtual machines freely if they have specific performance requirements towards the infrastructure (e.g. hardware acceleration, special CPU requirements, etc.).

Hence, according to the present invention, the decisions regarding, e.g., migration of virtual machines on a multiple data center deployment are put under the control of the virtual network function application, and are not driven by infrastructure management decisions. Thereby, the high availability of telecommunication virtual network functions is able to be provided independent from the underlying network function virtualization infrastructure 200.

According to the present invention, to move the logic regarding migration/scaling of virtual machines to the virtual network function applications (and not to decide scaling via the infrastructure) allows to be able to address the power consumption issue while still allow the virtual network functions (i.e. the virtual network function applications 300 and their virtual network function instances 301, 302, ...) to work properly in a high-performance environment. Hence, according to the present invention, the virtual network function application is able to scale-out or scale-in based on the key performance indicators of the system (or telecommunications network), e.g. increase of attached users might cause a scale-out action for example for the virtual machine responsible for the user sessions management, i.e. the scaling is done to serve the purpose of the application in terms of capacity, data rate, etc. According to the present invention, power consumption information (i.e. at least the first and second overall consumption indication and the first and second consumption limit indication) is fed to virtual network function application regarding the underlying physical infrastructure of the DC as a whole as one of the parameters to affect the scaling on the layer of the virtual network function application.

Especially, not only the power consumption of one host within the datacenter is provided (as it won't give the full picture for the virtual network function), but the overall consumption per data center. The information is especially fed from a datacenter manager component 250 towards the virtual network function application, and especially includes the following four parameters: overall data center energy consumption (overall consumption indication), configurable data center consumption limit (consumption limit indication), average virtual machine consumption, and data center busy status.

Especially, the following use cases apply:
In case that the data center consumption limit is reached and a virtual network function application wants (or needs) to scale-out, the virtual network function application in this case is not allowed to scale out in this data center. As telecommunications applications by default are typically able to steer traffic and sessions between different virtual network function instances of the same virtual network function application (with no downtime to allow for service upgrades and maintenance), it is advantageously possible according to the present invention that the virtual network function detects that the data center consumption limit is reached, and further users need to be moved towards another virtual network function instance in a different data center.
In case that the data center consumption limit is not reached and the virtual network function application wants to scale-out, the virtual network function application advantageously identifies how many virtual machines are needed to be started and identify whether the available margin (of additional energy consumption) is matching the required average virtual machine consumption and then decide whether to scale-out or steer some traffic towards another virtual network function instance in a different data center.
In case that the data center consumption changed and more room for new virtual machines is available, in order to avoid ping-pong for user sessions between different data centers, (i.e. if a virtual network function application moved traffic to another data center, this data center is not taking this traffic back once the data center consumption is reduced). This also simplifies the logic within the virtual network function application as it does not need to care anymore for the sessions that were moved. This also serves the power saving overall goal.
In case that the data center consumption limit is changed (by configuration) to a lower value, i.e. causing the consumption limit to be exhausted: In order to avoid that all virtual network function applications are racing to steer traffic to another data center (to reduce the number of running virtual machines within the considered data center), the datacenter manager 250 might create a list of virtual network function applications (or virtual network function instances) currently running and their associated number of virtual machines running in descending order; then, the new (reduced) consumption limit is transmitted (only) to the virtual network function application (or virtual network function instance) with the maximum number of virtual machines (i.e. the first on this list), while transmitting the old (i.e. previous) limit to the rest of the virtual network function applications (or virtual network function instance). After some time, traffic will have been steered towards another data center, such that then the considered virtual network function application (of virtual network function instance) is not the one having the highest number of virtual machines used (i.e. if falls behind the second virtual network function application (or virtual network function instance) in the previously mentioned list). In case the data center consumption limit is still exhausted, the datacenter manager 250 again sends the new limit to the virtual network function application (or virtual network function instance) having the most virtual machines (i.e. in the considered case, this should be the virtual network function application or instance having been the second virtual network function application or instance on that previous list), and so on until the limit is not exhausted anymore and the new limit will be sent to all virtual network function applications (or virtual network function instances) to prevent future scaling in the data center.
In case the data center consumption limit changed by configuration to a lower value, while a virtual network function application wants to scale, as described above, the data center manager component 250 addresses one virtual network function application after another to reduce the consumption and match the limit; during this time, the data center manager 250 raises the data center busy status to all virtual network function applications except the one addressed to reduce its number of virtual machines to indicate that no scaling functionalities shall now take place at all.

## Claims

1. Method for enhanced management and/or energy efficient implementation of network function virtualization within a telecommunications network (100), wherein the telecommunications network (100) comprises a network function virtualization infrastructure (200), comprising a plurality of physical and/or virtual machines (21, 22, 23, 24) as processing or computing resources in a network architecture of the telecommunications network (100) realizing network function virtualization technologies, the network function virtualization infrastructure (200) comprising a first data center (251) and at least a second data center (252),
wherein, by means of or by using the network function virtualization infrastructure (200), at least one virtual network function application (300) is implemented within the telecommunications network (100), the virtual network function application (300) involving a plurality of different virtual network function instances (301, 302) using at least part of the plurality of physical and/or virtual machines (21, 22, 23, 24) as processing or computing resources, wherein the method comprises the following steps:
-- in a first step, the virtual network function application (300) receives, regarding the first data center (251), a first overall consumption indication and a first consumption limit indication, and, regarding the second data center (252), a second overall consumption indication and a second consumption limit indication, the first and second overall consumption indication and the first and second consumption limit indication relating, respectively, to the overall energy consumption and to an energy consumption limit of the first and the second data center (251, 252), respectively,
-- in a second step, the virtual network function application (300) decides dependent on the first and second overall consumption indication and/or dependent on the first and second consumption limit indication
- - whether, and in which one of the available data centers (251, 252), an additional virtual network function instance (301, 302) is to be used or is to be instantiated and/or whether, and in which one of the available data centers (251, 252), an additional physical and/or virtual machine (21, 22, 23, 24) is to be used, and/or
- - whether, and in which one of the available data centers (251, 252), a virtual network function instance (301, 302) is to be removed or released and/or whether, and in which one of the available data centers (251, 252), a physical and/or virtual machine (21, 22, 23, 24) is to be deallocated or freed,
-- in a third step, the decision taken in the second step is implemented,
wherein in case the first consumption limit indication is lowered by configuration while, besides the virtual network function application (300), a further virtual network function application uses processing or computing resources of the first data center (251), the first overall consumption indication and the first consumption limit indication is transmitted only to the virtual network function application (300) in case that the virtual network function application (300) uses more processing or computing resources of the first data center (251) compared to the further virtual network function application.

2. Method according to claim 1, wherein, depending on
-- differing performance requirements and/or depending on different network loads of the telecommunications network (100) at different points in time, and
-- differing first and second overall consumption indications and/or first and second consumption limit indications at different points in time,
the virtual network function application (300) uses different processing or computing resources of the network function virtualization infrastructure (200) and/or a different distribution of processing or computing resources among the first and second data center (251, 252),
wherein the virtual network function application (300) comprises a scaling entity or scaling module (350), wherein - depending on a current performance requirement and/or on a current network load, as well as depending on the first and second overall consumption indication and/or the first and second consumption limit indication - the scaling entity or scaling module (350) of the virtual network function application (300) decides
-- to modify the allocation of processing or computing resources of the network function virtualization infrastructure (200), and/or
-- to modify the distribution of processing or computing resources and/or the distribution of performance requirements and/or of network load among the first and second data center (251, 252).

3. Method according to claim 2, wherein, in case that the first overall consumption indication and the first consumption limit indication indicate that the energy consumption limit of the first data center (251) is reached, the scaling entity or scaling module (350) of the virtual network function application (300) decides to move additional performance requirements and/or additional network load of the telecommunications network (100) to a data center different from the first data center (251), especially to the second data center (252).

4. Method according to claim 2 or 3, wherein, in case that the first overall consumption indication and the first consumption limit indication indicate that additional capacity and/or energy consumption volume is available at the first data center (251), the scaling entity or scaling module (350) of the virtual network function application (300) decides to add or to instantiate an additional virtual network function instance (301, 302) within the first data center (251) and/or to add or to use an additional physical and/or virtual machine (21, 22, 23, 24) within the first data center (251), thereby especially taking into account the number of required additional physical and/or virtual machines (21, 22, 23, 24) as well as an average consumption indication being related to the average energy consumption of a physical and/or virtual machine (21, 22, 23, 24).

5. Method according to one of the preceding claims, wherein the network function virtualization infrastructure (200) transmits the first overall consumption indication and the first consumption limit indication to the virtual network function application (300).

6. Method according to one of the preceding claims,
wherein a data center busy status indication is transmitted to the further virtual network function application, the data center busy status indication especially indicating that scaling operations are to be avoided regarding the further virtual network function application.

7. Network function virtualization infrastructure (200) for enhanced management and/or energy efficient implementation of network function virtualization within a telecommunications network (100), the network function virtualization infrastructure (200) comprising a plurality of physical and/or virtual machines (21, 22, 23, 24) as processing or computing resources in a network architecture of the telecommunications network (100) realizing network function virtualization technologies, the network function virtualization infrastructure (200) comprising a first data center (251) and at least a second data center (252),
wherein, by means of or by using the network function virtualization infrastructure (200), at least one virtual network function application (300) is implemented within the telecommunications network (100), the virtual network function application (300) involving a plurality of different virtual network function instances (301, 302) using at least part of the plurality of physical and/or virtual machines (21, 22, 23, 24) as processing or computing resources, wherein the network function virtualization infrastructure (200) is configured such that:
-- the virtual network function application (300) receives, regarding the first data center (251), a first overall consumption indication and a first consumption limit indication, and, regarding the second data center (252), a second overall consumption indication and a second consumption limit indication, the first and second overall consumption indication and the first and second consumption limit indication relating, respectively, to the overall energy consumption and to an energy consumption limit of the first and the second data center (251, 252), respectively,
-- the virtual network function application (300) decides dependent on the first and second overall consumption indication and/or dependent on the first and second consumption limit indication
-- whether, and in which one of the available data centers (251, 252), an additional virtual network function instance (301, 302) is to be used or is to be instantiated and/or whether, and in which one of the available data centers (251, 252), an additional physical and/or virtual machine (21, 22, 23, 24) is to be used, and/or
-- whether, and in which one of the available data centers (251, 252), a virtual network function instance (301, 302) is to be removed or released and/or whether, and in which one of the available data centers (251, 252), a physical and/or virtual machine (21, 22, 23, 24) is to be deallocated or freed,
wherein the network function virtualization infrastructure (200) is configured to implement the decision taken by the virtual network function application (300), wherein the network function virtualization infrastructure (200) is configured such that in case the first consumption limit indication is lowered by configuration while, besides the virtual network function application (300), a further virtual network function application uses processing or computing resources of the first data center (251), the first overall consumption indication and the first consumption limit indication is transmitted only to the virtual network function application (300) in case that the virtual network function application (300) uses more processing or computing resources of the first data center (251) compared to the further virtual network function application.

8. Telecommunications network (100) for enhanced management and/or energy efficient implementation of network function virtualization within a telecommunications network (100), wherein the telecommunications network (100) comprises a network function virtualization infrastructure (200) according to claim 7.

9. Computer program comprising a computer readable program code which, when executed on a computer or on a physical and/or virtual machine of a network function virtualization infrastructure (200) of or within a telecommunications network (100) causes the computer or the physical and/or virtual machine of the network function virtualization infrastructure (200) of or within the telecommunications network (100) to perform a method according to any one of claims 1 to 6.

10. Computer-readable medium comprising instructions which when executed on a computer or on a physical and/or virtual machine of a network function virtualization infrastructure (200) of or within a telecommunications network (100) causes the computer or the physical and/or virtual machine of the network function virtualization infrastructure (200) of or within the telecommunications network (100) to perform a method according to any one of claims 1 to 6.

## Patentansprüche

1. Verfahren für ein verbessertes Management und/oder eine energieeffiziente Implementierung einer Netzfunktionsvirtualisierung innerhalb eines Telekommunikationsnetzes (100), wobei das Telekommunikationsnetz (100) eine Netzfunktionsvirtualisierungsinfrastruktur (200) umfasst, die mehrere physische und/oder virtuelle Maschinen (21, 22, 23, 24) als Verarbeitungs- oder Rechenressourcen in einer Netzarchitektur des Telekommunikationsnetzes (100) umfasst, die Netzfunktionsvirtualisierungstechnologien realisieren, wobei die Netzfunktionsvirtualisierungsinfrastruktur (200) ein erstes Datenzentrum (251) und mindestens ein zweites Datenzentrum (252) umfasst,
wobei mittels oder unter Verwendung der Netzfunktionsvirtualisierungsinfrastruktur (200) mindestens eine virtuelle Netzfunktionsanwendung (300) innerhalb des Telekommunikationsnetzes (100) implementiert wird, wobei die virtuelle Netzfunktionsanwendung (300) mehrere verschiedene virtuelle Netzfunktionsinstanzen (301, 302) umfasst, die mindestens einen Teil der mehreren physischen und/oder virtuellen Maschinen (21, 22, 23, 24) als Verarbeitungs- oder Rechenressourcen verwenden, wobei das Verfahren die folgenden Schritte umfasst:
- in einem ersten Schritt empfängt die virtuelle Netzfunktionsanwendung (300) in Bezug auf das erste Datenzentrum (251) eine erste Gesamtverbrauchsangabe und eine erste Verbrauchslimitangabe und in Bezug auf das zweite Datenzentrum (252) eine zweite Gesamtverbrauchsangabe und eine zweite Verbrauchslimitangabe, wobei sich die erste und die zweite Gesamtverbrauchsangabe und die erste und die zweite Verbrauchslimitangabe auf den Gesamtenergieverbrauch bzw auf ein Energieverbrauchslimit des ersten und des zweiten Datenzentrums (251, 252) beziehen,
- in einem zweiten Schritt entscheidet die virtuelle Netzfunktionsanwendung (300) in Abhängigkeit von der ersten und der zweiten Gesamtverbrauchsangabe und/oder in Abhängigkeit von der ersten und der zweiten Verbrauchslimitangabe:
- ob, und in welchem der verfügbaren Datenzentren (251, 252), eine zusätzliche virtuelle Netzfunktionsinstanz (301, 302) zu verwenden ist oder zu instanziieren ist und/oder ob und in welchem der verfügbaren Datenzentren (251, 252) eine zusätzliche physische und/oder virtuelle Maschine (21, 22, 23, 24) zu verwenden ist, und/oder
- ob, und in welchem der verfügbaren Datenzentren (251, 252), eine virtuelle Netzfunktionsinstanz (301, 302) entfernt oder freigegeben werden soll und/oder ob und in welchem der verfügbaren Datenzentren (251, 252) eine physische und/oder virtuelle Maschine (21, 22, 23, 24) deallokiert oder frei gemacht werden soll,
- in einem dritten Schritt wird die im zweiten Schritt getroffene Entscheidung implementiert, wobei für den Fall, dass die erste Verbrauchslimitangabe durch Konfiguration herabgesetzt wird, während neben der virtuellen Netzfunktionsanwendung (300) eine weitere virtuelle Netzfunktionsanwendung Verarbeitungs- oder Rechenressourcen des ersten Datenzentrums (251) verwendet, die erste Gesamtverbrauchsangabe und die erste Verbrauchslimitangabe nur an die virtuelle Netzfunktionsanwendung (300) gesendet wird, falls die virtuelle Netzfunktionsanwendung (300) mehr Verarbeitungs- oder Rechenressourcen des ersten Datenzentrums (251) im Vergleich zu der weiteren virtuellen Netzfunktionsanwendung verwendet.

2. Verfahren nach Anspruch 1, wobei in Abhängigkeit von
- unterschiedlichen Leistungsanforderungen und/oder in Abhängigkeit von verschiedenen Netzlasten des Telekommunikationsnetzes (100) zu verschiedenen Zeitpunkten und
- unterschiedlichen ersten und zweiten Gesamtverbrauchsangaben und/oder ersten und zweiten Verbrauchslimitangaben zu verschiedenen Zeitpunkten
die virtuelle Netzfunktionsanwendung (300) verschiedene Verarbeitungs- oder Rechenressourcen der Netzfunktionsvirtualisierungsinfrastruktur (200) und/oder eine andere Verteilung von Verarbeitungs- oder Rechenressourcen zwischen dem ersten und dem zweiten Datenzentrum (251, 252) verwendet,
wobei die virtuelle Netzfunktionsanwendung (300) eine Skalierungsentität oder ein Skalierungsmodul (350) umfasst, wobei - in Abhängigkeit von einer momentanen Leistungsanforderung und/oder einer momentanen Netzlast sowie in Abhängigkeit von der ersten und der zweiten Gesamtverbrauchsangabe und/oder der ersten und der zweiten Verbrauchslimitangabe - die Skalierungsentität oder das Skalierungsmodul (350) der virtuellen Netzfunktionsanwendung (300) entscheidet,
- die Zuteilung von Verarbeitungs- oder Rechenressourcen der Netzfunktionsvirtualisierungsinfrastruktur (200) zu modifizieren und/oder
- die Verteilung der Verarbeitungs- oder Rechenressourcen und/oder die Verteilung der Leistungsanforderungen und/oder der Netzlast zwischen dem ersten und dem zweiten Datenzentrum (251, 252) zu modifizieren.

3. Verfahren nach Anspruch 2, wobei für den Fall, dass die erste Gesamtverbrauchsangabe und die erste Verbrauchslimitangabe angeben, dass das Energieverbrauchslimit des ersten Datenzentrums (251) erreicht ist, die Skalierungsentität oder das Skalierungsmodul (350) der virtuellen Netzfunktionsanwendung (300) entscheidet, zusätzliche Leistungsanforderungen und/oder zusätzliche Netzlast des Telekommunikationsnetzes (100) in ein anderes Datenzentrum als das erste Datenzentrum (251), insbesondere in das zweite Datenzentrum (252), zu verlagern.

4. Verfahren nach Anspruch 2 oder 3, wobei für den Fall, dass die erste Gesamtverbrauchsangabe und die erste Verbrauchslimitangabe angeben, dass zusätzliche Kapazität und/oder zusätzliches Energieverbrauchsvolumen in dem ersten Datenzentrum (251) verfügbar sind, die Skalierungsentität oder das Skalierungsmodul (350) der virtuellen Netzfunktionsanwendung (300) entscheidet, eine zusätzliche virtuelle Netzfunktionsinstanz (301, 302) innerhalb des ersten Datenzentrums (251) hinzuzufügen oder zu instanziieren und/oder eine zusätzliche physische und/oder virtuelle Maschine (21, 22, 23, 24) innerhalb des ersten Datenzentrums (251) hinzuzufügen oder zu verwenden, wobei insbesondere die Anzahl der erforderlichen zusätzlichen physischen und/oder virtuellen Maschinen (21, 22, 23, 24) sowie eine durchschnittliche Verbrauchsangabe, die sich auf den durchschnittlichen Energieverbrauch einer physischen und/oder virtuellen Maschine (21, 22, 23, 24) bezieht, berücksichtigt werden.

5. Verfahren nach einem der vorangehenden Ansprüche, wobei die Netzfunktionsvirtualisierungsinfrastruktur (200) die erste Gesamtverbrauchsangabe und die erste Verbrauchslimitangabe an die virtuelle Netzfunktionsanwendung (300) sendet.

6. Verfahren nach einem der vorangehenden Ansprüche,
wobei eine Datenzentrum-belegt-Statusangabe an die weitere virtuelle Netzfunktionsanwendung gesendet wird, wobei die Datenzentrum-belegt-Statusangabe insbesondere angibt, dass Skalierungsoperationen bezüglich der weiteren virtuellen Netzfunktionsanwendung zu vermeiden sind.

7. Netzfunktionsvirtualisierungsinfrastruktur (200) für ein verbessertes Management und/oder eine energieeffiziente Implementierung einer Netzfunktionsvirtualisierung innerhalb eines Telekommunikationsnetzes (100), wobei die Netzfunktionsvirtualisierungsinfrastruktur (200) mehrere physische und/oder virtuelle Maschinen (21, 22, 23, 24) als Verarbeitungs- oder Rechenressourcen in einer Netzarchitektur des Telekommunikationsnetzes (100) umfasst, die Netzfunktionsvirtualisierungstechnologien realisieren, wobei die Netzfunktionsvirtualisierungsinfrastruktur (200) ein erstes Datenzentrum (251) und mindestens ein zweites Datenzentrum (252) umfasst,
wobei mittels oder unter Verwendung der Netzfunktionsvirtualisierungsinfrastruktur (200) mindestens eine virtuelle Netzfunktionsanwendung (300) innerhalb des Telekommunikationsnetzes (100) implementiert wird, wobei die virtuelle Netzfunktionsanwendung (300) mehrere verschiedene virtuelle Netzfunktionsinstanzen (301, 302) umfasst, die mindestens einen Teil der mehreren physischen und/oder virtuellen Maschinen (21, 22, 23, 24) als Verarbeitungs- oder Rechenressourcen verwenden, wobei die Netzfunktionsvirtualisierungsinfrastruktur (200) so eingerichtet ist, dass:
- die virtuelle Netzfunktionsanwendung (300) in Bezug auf das erste Datenzentrum (251) eine erste Gesamtverbrauchsangabe und eine erste Verbrauchslimitangabe und in Bezug auf das zweite Datenzentrum (252) eine zweite Gesamtverbrauchsangabe und eine zweite Verbrauchslimitangabe empfängt, wobei sich die erste und die zweite Gesamtverbrauchsangabe und die erste und die zweite Verbrauchslimitangabe auf den Gesamtenergieverbrauch bzw auf ein Energieverbrauchslimit des ersten und des zweiten Datenzentrums (251, 252) beziehen,
- die virtuelle Netzfunktionsanwendung (300) in Abhängigkeit von der ersten und der zweiten Gesamtverbrauchsangabe und/oder in Abhängigkeit von der ersten und der zweiten Verbrauchslimitangabe entscheidet:
- ob, und in welchem der verfügbaren Datenzentren (251, 252) eine zusätzliche virtuelle Netzfunktionsinstanz (301, 302) zu verwenden ist oder zu instanziieren ist und/oder ob und in welchem der verfügbaren Datenzentren (251, 252) eine zusätzliche physische und/oder virtuelle Maschine (21, 22, 23, 24) zu verwenden ist, und/oder
- ob, und in welchem der verfügbaren Datenzentren (251, 252) eine virtuelle Netzfunktionsinstanz (301, 302) entfernt oder freigegeben werden soll und/oder ob und in welchem der verfügbaren Datenzentren (251, 252) eine physische und/oder virtuelle Maschine (21, 22, 23, 24) deallokiert oder frei gemacht werden soll,
- wobei die Netzfunktionsvirtualisierungsinfrastruktur (200) dafür eingerichtet ist, die durch die virtuelle Netzfunktionsanwendung (300) getroffene Entscheidung zu implementieren, wobei die Netzfunktionsvirtualisierungsinfrastruktur (200) so eingerichtet ist, dass, für den Fall, dass die erste Verbrauchslimitangabe durch Konfiguration herabgesetzt wird, während neben der virtuellen Netzfunktionsanwendung (300) eine weitere virtuelle Netzfunktionsanwendung Verarbeitungs- oder Rechenressourcen des ersten Datenzentrums (251) verwendet, die erste Gesamtverbrauchsangabe und die erste Verbrauchslimitangabe nur an die virtuelle Netzfunktionsanwendung (300) gesendet wird, falls die virtuelle Netzfunktionsanwendung (300) mehr Verarbeitungs- oder Rechenressourcen des ersten Datenzentrums (251) im Vergleich zu der weiteren virtuellen Netzfunktionsanwendung verwendet.

8. Telekommunikationsnetz (100) für ein verbessertes Management und/oder eine energieeffiziente Implementierung einer Netzfunktionsvirtualisierung innerhalb eines Telekommunikationsnetzes (100), wobei das Telekommunikationsnetz (100) eine Netzfunktionsvirtualisierungsinfrastruktur (200) nach Anspruch 7 umfasst.

9. Computerprogramm, umfassend einen computerlesbaren Programmcode, der, wenn er auf einem Computer oder in einer physischen und/oder virtuellen Maschine einer Netzfunktionsvirtualisierungsinfrastruktur (200) eines oder innerhalb eines Telekommunikationsnetzes (100) ausgeführt wird, den Computer oder die physische und/oder virtuelle Maschine der Netzfunktionsvirtualisierungsinfrastruktur (200) des oder innerhalb des Telekommunikationsnetzes (100) veranlasst, ein Verfahren nach einem der Ansprüche 1 bis 6 durchzuführen.

10. Computerlesbares Medium, umfassend Instruktionen, die, wenn sie auf einem Computer oder in einer physischen und/oder virtuellen Maschine einer Netzfunktionsvirtualisierungsinfrastruktur (200) eines oder innerhalb eines Telekommunikationsnetzes (100) ausgeführt werden, den Computer oder die physische und/oder virtuelle Maschine der Netzfunktionsvirtualisierungsinfrastruktur (200) des oder innerhalb des Telekommunikationsnetzes (100) veranlassen, ein Verfahren nach einem der Ansprüche 1 bis 6 durchzuführen.

## Revendications

1. Procédé de gestion améliorée et/ou de mise en œuvre économe en énergie d'une virtualisation de fonctions réseau au sein d'un réseau de télécommunications (100), dans lequel le réseau de télécommunications (100) comprend une infrastructure de virtualisation de fonctions réseau (200), comprenant une pluralité de machines physiques et/ou virtuelles (21, 22, 23, 24) comme ressources de traitement ou de calcul dans une architecture réseau du réseau de télécommunications (100) réalisant des technologies de virtualisation de fonctions réseau, l'infrastructure de virtualisation de fonctions réseau (200) comprenant un premier centre de données (251) et au moins un second centre de données (252),
dans lequel, au moyen de ou en utilisant l'infrastructure de virtualisation de fonctions réseau (200), au moins une application de fonction réseau virtuelle (300) est mise en œuvre au sein du réseau de télécommunications (100), l'application de fonction réseau virtuelle (300) impliquant une pluralité d'instances de fonction réseau virtuelle différentes (301, 302) utilisant au moins une partie de la pluralité de machines physiques et/ou virtuelles (21, 22, 23, 24) comme ressources de traitement ou de calcul, le procédé comprenant les étapes suivantes :
- dans une première étape, l'application de fonction réseau virtuelle (300) reçoit, concernant le premier centre de données (251), une première indication de consommation globale et une première indication de limite de consommation, et, concernant le second centre de données (252), une seconde indication de consommation globale et une seconde indication de limite de consommation, les première et seconde indications de consommation globale et les première et seconde indications de limite de consommation se rapportant respectivement à la consommation d'énergie globale et à une limite de consommation d'énergie du premier et du second centre de données (251, 252), respectivement,
- dans une deuxième étape, l'application de fonction réseau virtuelle (300) décide en fonction de la première et de la seconde indication de consommation globale et/ou en fonction de la première et de la seconde indication de limite de consommation
- si, et dans lequel des centres de données disponibles (251, 252), une instance supplémentaire de fonction réseau virtuelle (301, 302) doit être utilisée ou doit être instanciée et/ou si, et dans lequel des centres de données disponibles (251, 252), une machine physique et/ou virtuelle supplémentaire (21, 22, 23, 24) doit être utilisée, et/ou
- si, et dans lequel des centres de données disponibles (251,252), une instance de fonction réseau virtuelle (301, 302) doit être supprimée ou libérée et/ou si, et dans lequel des centres de données disponibles (251,252), une machine physique et/ou virtuelle (21, 22, 23, 24) doit être désattribuée ou libérée,
- dans une troisième étape, la décision prise dans la deuxième étape est mise en oeuvre, dans lequel, dans le cas où la première indication de limite de consommation est abaissée par configuration tandis que, outre l'application de fonction réseau virtuelle (300), une autre application de fonction réseau virtuelle utilise des ressources de traitement ou de calcul du premier centre de données (251), la première indication de consommation globale et la première indication de limite de consommation sont transmises uniquement à l'application de fonction réseau virtuelle (300) dans le cas où l'application de fonction réseau virtuelle (300) utilise plus de ressources de traitement ou de calcul du premier centre de données (251) comparativement à l'autre application de fonction réseau virtuelle.

2. Procédé selon la revendication 1, dans lequel, en fonction
- d'exigences de performances différentes et/ou en fonction de charges de réseau différentes du réseau de télécommunication (100) à différents instants, et
- de première et seconde indications de consommation globale différentes et/ou de première et seconde indications de limite de consommation à différents instants,
l'application de fonction réseau virtuelle (300) utilise des ressources de traitement ou de calcul différentes de l'infrastructure de virtualisation de fonctions réseau (200) et/ou une répartition différente de ressources de traitement ou de calcul entre le premier et le second centre de données (251, 252),
dans lequel l'application de fonction réseau virtuelle (300) comprend une entité de mise à l'échelle ou un module de mise à l'échelle (350), dans lequel - en fonction d'une exigence de performance actuelle et/ou d'une charge de réseau actuelle, ainsi qu'en fonction la première et de la seconde indication de consommation globale et/ou de la première et la seconde indication de limite de consommation - l'entité de mise à l'échelle ou le module de mise à l'échelle (350) de l'application de fonction réseau virtuelle (300) décide
- de modifier l'attribution de ressources de traitement ou de calcul de l'infrastructure de virtualisation de fonctions réseau (200), et/ou
- de modifier la répartition de ressources de traitement ou de calcul et/ou la répartition d'exigences de performances et/ou de la charge de réseau entre le premier et le second centre de données (251, 252).

3. Procédé selon la revendication 2, dans lequel, dans le cas où la première indication de consommation globale et la première indication de limite de consommation indiquent que la limite de consommation d'énergie du premier centre de données (251) est atteinte, l'entité de mise à l'échelle ou le module de mise à l'échelle (350) de l'application de fonction réseau virtuelle (300) décide de déplacer des exigences de performances supplémentaires et/ou une charge de réseau supplémentaire du réseau de télécommunications (100) vers un centre de données différent du premier centre de données (251), en particulier vers le second centre de données (252).

4. Procédé selon la revendication 2 ou 3, dans lequel, dans le cas où la première indication de consommation globale et la première indication de limite de consommation indiquent qu'une capacité et/ou un volume de consommation d'énergie supplémentaires sont disponibles au niveau du premier centre de données (251), l'entité de mise à l'échelle ou le module de mise à l'échelle (350) de l'application de fonction réseau virtuelle (300) décide d'ajouter ou d'instancier une instance de fonction réseau virtuelle supplémentaire (301, 302) au sein du premier centre de données (251) et/ou d'ajouter ou d'utiliser une machine physique et/ou virtuelle (21, 22, 23, 24) au sein du premier centre de données (251), en tenant ainsi compte notamment du nombre de machines physiques et/ou virtuelles supplémentaires requises (21, 22, 23, 24) ainsi que d'une indication de consommation moyenne qui est liée à la consommation d'énergie moyenne d'une machine physique et/ou virtuelle (21, 22, 23, 24).

5. Procédé selon l'une des revendications précédentes, dans lequel l'infrastructure de virtualisation de fonctions réseau (200) transmet la première indication de consommation globale et la première indication de limite de consommation à l'application de fonction réseau virtuelle (300).

6. Procédé selon l'une des revendications précédentes,
dans lequel une indication d'état d'occupation de centre de données est transmise à l'autre application de fonction réseau virtuelle, l'indication d'état d'occupation de centre de données indiquant en particulier que des opérations de mise à l'échelle doivent être évitées concernant l'autre application de fonction réseau virtuelle.

7. Infrastructure de virtualisation de fonctions réseau (200) pour une gestion améliorée et/ou une mise en œuvre économe en énergie de la virtualisation de fonctions réseau au sein d'un réseau de télécommunications (100), l'infrastructure de virtualisation de fonctions réseau (200) comprenant une pluralité de machines physiques et/ou virtuelles (21, 22, 23, 24) en tant que ressources de traitement ou de calcul dans une architecture de réseau du réseau de télécommunications (100) réalisant des technologies de virtualisation de fonctions réseau, l'infrastructure de virtualisation de fonctions réseau (200) comprenant un premier centre de données (251) et au moins un second centre de données (252),
dans lequel, au moyen de ou en utilisant l'infrastructure de virtualisation de fonctions réseau (200), au moins une application de fonction réseau virtuelle (300) est mise en œuvre au sein du réseau de télécommunications (100), l'application de fonction réseau virtuelle (300) impliquant une pluralité d'instances de fonction réseau virtuelle différentes (301, 302) utilisant au moins une partie de la pluralité de machines physiques et/ou virtuelles (21, 22, 23, 24) comme ressources de traitement ou de calcul, dans lequel l'infrastructure de virtualisation de fonctions réseau (200) est configurée de telle sorte que :
- l'application de fonction réseau virtuelle (300) reçoit, concernant le premier centre de données (251), une première indication de consommation globale et une première indication de limite de consommation, et, concernant le second centre de données (252), une seconde indication de consommation globale et une seconde indication de limite de consommation, les première et seconde indications de consommation globale et les première et seconde indications de limite de consommation se rapportant respectivement à la consommation d'énergie globale et à une limite de consommation d'énergie du premier et du second centre de données (251, 252), respectivement,
- l'application de fonction réseau virtuelle (300) décide en fonction la première et de la seconde indication de consommation globale et/ou en fonction la première et de la seconde indication de limite de consommation
- si, et dans lequel des centres de données disponibles (251, 252), une instance supplémentaire de fonction réseau virtuelle (301, 302) doit être utilisée ou doit être instanciée et/ou si, et dans lequel des centres de données disponibles (251, 252), une machine physique et/ou virtuelle supplémentaire (21, 22, 23, 24) doit être utilisée, et/ou
- si, et dans lequel des centres de données disponibles (251,252), une instance de fonction réseau virtuelle (301, 302) doit être supprimée ou libérée et/ou si, et dans lequel des centres de données disponibles (251,252), une machine physique et/ou virtuelle (21, 22, 23, 24) doit être désattribuée ou libérée,
dans lequel l'infrastructure de virtualisation de fonctions réseau (200) est configurée pour mettre en œuvre la décision prise par l'application de fonction réseau virtuelle (300), dans lequel l'infrastructure de virtualisation de fonctions réseau (200) est configurée de telle sorte que dans le cas où la première indication de limite de consommation est abaissée par configuration tandis que, outre l'application de fonction réseau virtuelle (300), une autre application de fonction réseau virtuelle utilise des ressources de traitement ou de calcul du premier centre de données (251), la première indication de consommation globale et la première indication de limite de consommation sont transmises uniquement à l'application de fonction réseau virtuelle (300) dans le cas où l'application de fonction réseau virtuelle (300) utilise plus de ressources de traitement ou de calcul du premier centre de données (251) comparativement à l'autre application de fonction réseau virtuelle.

8. Réseau de télécommunications (100) pour une gestion améliorée et/ou une mise en œuvre économe en énergie de la virtualisation de fonctions réseau au sein d'un réseau de télécommunications (100), dans lequel le réseau de télécommunications (100) comprend une infrastructure de virtualisation de fonctions réseau (200) selon la revendication 7.

9. Programme informatique comprenant un code de programme lisible par ordinateur qui, lorsqu'il est exécuté sur un ordinateur ou sur une machine physique et/ou virtuelle d'une infrastructure de virtualisation de fonctions réseau (200) de ou au sein d'un réseau de télécommunications (100), amène l'ordinateur ou la machine physique et/ou ou virtuelle de l'infrastructure de virtualisation de fonctions réseau (200) du ou au sein du réseau de télécommunications (100) à mettre en œuvre un procédé selon l'une quelconque des revendications 1 à 6.

10. Support lisible par ordinateur comprenant des instructions qui, lorsqu'elles sont exécutées sur un ordinateur ou sur une machine physique et/ou virtuelle d'une infrastructure de virtualisation de fonctions réseau (200) de ou au sein d'un réseau de télécommunications (100), amènent l'ordinateur ou la machine physique et/ou virtuelle de l'infrastructure de virtualisation de fonctions réseau (200) du ou au sein du réseau de télécommunications (100) à mettre en œuvre un procédé selon l'une quelconque des revendications 1 à 6.
